# EUROPÄISCHE PATENTANMELDUNG

(11) **EP 3 502 189 A1**
(43) Veröffentlichungstag der Anmeldung: **26.06.2019**
(21) Anmeldenummer: 17210042.2
(22) Anmeldetag: 22.12.2017
(51) Int. Cl.: C08L 77/06, C08K 3/40

(54) **VERWENDUNG EINER POLYAMID-FORMMASSEN ZUR REDUKTION VON BELAGSBILDUNG BEI DER THERMOPLASTISCHEN VERARBEITUNG, POLYAMID-FORMMASSE UND VERFAHREN ZUR HERSTELLUNG VON GEBRAUCHSGEGENSTÄNDEN**

(71) Anmelder: EMS-Patent AG, 7013 Domat/Ems (CH)
(72) Erfinder: Stöppelmann, Georg, 7402 Bonaduz (CH)
(74) Vertreter: Pfenning, Meinig & Partner mbB

(57) **Zusammenfassung**

Die vorliegende Erfindung betrifft die Verwendung von thermoplastischen Polyamid-Formmassen zur Reduktion der Bildung von Feststoffablagerungen und/oder Belägen in den bei der thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen verwendeten Werkzeugen. Die verwendeten Formmassen basieren auf Polyamiden, die überwiegend auf den Polyamid-Einheiten 616, 516 und 916 beruhen. Durch Verwendung der erfindungsgemässen Polyamid-Formmassen werden die sonst bei Polyamid 12 üblichen Feststoffablagerungen und/oder Beläge bei der weiteren Verarbeitung im Spritzguss oder in der Extrusion stark reduziert bzw. vermieden.

## Beschreibung

### TECHNISCHES GEBIET

Die vorliegende Erfindung betrifft die Verwendung von thermoplastischen Polyamid-Formmassen zur Reduktion der Bildung von Feststoffablagerungen und/oder Belägen in den bei der thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen verwendeten Werkzeugen. Die verwendeten Formmassen basieren auf Polyamiden, die überwiegend auf den Polyamid-Einheiten 616, 516 und 916 beruhen. Durch Verwendung der erfindungsgemässen Polyamid-Formmassen werden die sonst bei Polyamid 12 üblichen Feststoffablagerungen und/oder Beläge bei der weiteren Verarbeitung im Spritzguss oder in der Extrusion stark reduziert bzw. vermieden.

### STAND DER TECHNIK

Polyamidschmelzen weisen im thermodynamischen Gleichgewichtszustand bestimmte Konzentrationen an linearen und gegebenenfalls zyklischen Monomeren sowie linearen und zyklischen Oligomeren sowie auch Wasser auf. Die niedermolekularen Bestandteile beeinflussen die Verarbeitbarkeit der Produkte. Bei Spritzguss- oder Extrusionsprozessen können Restmonomere, insbesondere Lactame, und zyklische Oligomere ausdampfen und durch die Bildung von Feststoffablagerungen und Belägen in den hierbei verwendeten Werkzeugen stören. Je nach Art des Polyamids, der Produktions- und Verarbeitungsbedingungen müssen zusätzlich niedermolekularen Abbauprodukte hinsichtlich der Belagsbildung berücksichtigt werden.

Daher ist es wünschenswert, die oben angesprochenen niedermolekularen Bestandteile als auch Oligomere möglichst zu entfernen bzw. zu vermeiden, so dass bei der späteren thermoplastischen Verarbeitung keine Feststoffablagerungen oder Beläge mehr entstehen.

Unter den Polyamiden zeichnet sich PA 12 durch ein speziell interessantes Eigenschaftsprofil aus. So lässt sich Polyamid 12 auf die verschiedensten Arten modifizieren, und die resultierenden Formmassen sind danach ausgezeichnet thermoplastisch im Spritzguss und in Extrusionsprozessen zu Gebrauchsgegenständen von hohem Praxiswert umformbar. Polyamid 12 entspricht insgesamt dem Polyamid-Typ, dessen Eigenschaften im Praxisgebrauch bei Änderung von Temperatur und Feuchte am wenigsten beeinflusst werden.

Ein Problem ist aber, dass beim üblichen, hydrolytischen Polymerisationsprozess/ Autoklavenprozess der Monomerumsatz nur zu ca. 99,5 % erfolgt und das verbleibende Restlactam im Polymer schwerlöslich ist, so dass es insbesondere beim Verarbeiten aus der Schmelze, aber auch im späteren Praxisgebrauch zum Ausschwitzen und Sublimieren von Lactam 12 (LC12), insbesondere auf gekühlte Flächen, z. B. die Oberflächen der Werkzeuge und der Fertigteile, und damit zu Belagsbildung kommt. Wegen des hohen Schmelzpunktes von Lactam 12 bilden solche Sublimate oft störende Ablagerungen, die insbesondere dann, wenn weitere Zusätze an die Oberfläche migrieren, Anlass zu Prozessstörungen mit Oberflächenbeschädigungen und damit zu Produktionsunterbrüchen führen können und sich auch sogenannte "Black-Spots" bilden können.

Bekannte Maßnahmen zur Reduktion und Eliminierung des Lactam 12 - Restgehaltes sind z.B., die Schmelze- und die Festphasen-Nachkondensation mit Vakuumeinwirkung sowie Flüssigextraktionsprozesse oder die Umfällung aus Lösung. Auch diese Prozesse, bei denen sich Lactam unter Wärmeeinwirkung verflüchtigt, können durch das Lactamsublimat gestört werden. Zudem sind Lactamnebel leichtentzündlich, und die Prozesse bedürfen spezieller Vorsichtsmassnahmen. Zudem kann die zusätzliche thermische Belastung das Polymer schädigen. Bei der thermoplastischen Verarbeitung von Polyamid 12-Formmassen im Spritzgussverfahren und in der Extrusion ist die Bildung von Feststoffablagerungen, die insbesondere aus Lactam 12 (LC 12) bestehen, nachteilig.

Zur Reduktion der Belagsbildung von Polyamid 12 Formmassen schlägt EP 1 550 684 A2 den Zusatz von kleinen Mengen an polyamidtypischen Weichmachern oder aprotischen Lösungsmittel vor. Dadurch wird zwar die Ausbildung eines festen Belages vermieden, an den hergestellten Gegenständen haftet aber ein viskoser Film mit den gelösten Rückständen, was nur für wenige Anwendungen tolerabel ist. Zudem enthalten diese Formmassen stets Lösungsmittel oder Weichmacher.

### AUFGABE DER ERFINDUNG

Anwender, die Polyamidformmassen zu z.B. Formteilen weiterverarbeiten und die sich z.B. nach der Normengruppe ISO 14000 zertifizieren lassen wollen, verpflichten sich zum nachhaltigen Wirtschaften. Sie erstellen beispielsweise Lebenszyklusanalysen (Life cycle assessment, LCA) über die CO₂-Bilanz von Produkten. Dazu trägt eine kurze Zeitspanne zwischen Freisetzung von CO₂ (Quelle) und erneute Immobilisierung (Senke) bei, wie sie durch die erfindungsgemäße Verwendung biologisch nachwachsender Rohstoffe mit den angegebenen Werten für den Bioanteil möglich ist. Der Fachmann steht somit vor dem Problem, ökologisch vorteilhafte Werkstoffe einsetzen zu müssen, die bisher mit nachteiligen Werkstoffeigenschaften verbunden waren. Die Erfindung stellt in einer Ausführungsform insofern eine Lehre zur Überwindung dieses Problems dar, da sie also überraschenderweise ein unerwartet hochwertiges transparentes Copolyamid als Werkstoff zur Verfügung stellt, welches dennoch ökologisch im wesentlichen unbedenklich ist, weil es weitgehend aus nachwachsenden oder erneuerbaren Rohstoffen aufgebaut ist.

Aufgabe der vorliegenden Erfindung ist es daher, thermoplastische Polyamid-Formmassen bereitzustellen, die weitgehend ein zu Polyamid 12 vergleichbares Eigenschafts- (z.B. Wasseraufnahme, thermische und mechanische Eigenschaften) und Verarbeitungsprofil aufweisen, einen Bioanteil von mindestens 60% aufweisen, die aber im Vergleich zu PA12 eine deutlich geringere Neigung zu Feststoffablagerungen bei der thermoplastischen Umformung aufweisen.

### DARSTELLUNG DER ERFINDUNG

Die zuvor genannte Aufgabe wird mit der Verwendung gemäss Patentanspruch 1, einer Polyamdiformmasse gemäss Patentanspruch 10 sowie einem Verfahren gemäss Patentanspruch 11 gelöst. Die abhängigen Patentansprüche stellen dabei vorteilhafte Weiterbildungen dar.

Die Lösung dieser Aufgabe wird dadurch erreicht, dass eine Polyamidformmasse enthaltend oder bestehend aus den folgenden Bestandteilen
(A) 37 - 100 Gew.-% einer Polyamidmischung bestehend aus den Komponenten (A1), (A2) und (A3), wobei
   (A1) 50 - 100 Gew.-% mindestens ein aliphatisches Polyamid, das mindestens zu 50 mol-% aus den Polyamid-Einheiten PA616, PA516 und PA916 besteht sowie Mischungen aus den zuvor genannten Polyamiden; und
   (A2) 0 - 50 Gew.-% mindestens ein transparentes Polyamid VX/WX/VY/WY/Z, wobei mindestens eine der Polyamideinheiten WX oder WY vorhanden ist und wobei die Abkürzungen V bis Z von den folgenden Molekülen abgeleitet sind: V: acyclisches aliphatisches Diamin mit 6 bis 12 Kohlenstoffatomen; W: cycloaliphatisches Diamin; X: acyclische aliphatische Dicarbonsäuren mit 9 bis 18 Kohlenstoffatomen; Y: aromatische Dicarbonsäuren Z: Lactame und Aminocarbonsäuren mit 6 bis 12 Kohlenstoffatomen;
   (A3) 0 - 50 Gew.-% mindestens ein aliphatisches Polyamid PA11, PA12 und PA10U mit U = amidisch gebundene acyclische aliphatische Dicarbonsäure mit 9 bis 18 Kohlenstoffatomen wobei die Summe aus (A1) bis (A3) die Gesamtheit der Komponente (A) ergibt;
(B) 0 - 60 Gew.-% Füll- oder Verstärkungsstoffe;
(C) 0 - 3 Gew.-% Hilfsstoffe und/oder Additive
wobei die Summe der Komponenten (A) bis (C) 100 Gew.-% ausmacht, zur Reduktion von Feststoffablagerungen und/oder Belägen bei der thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen verwendet wird.

Überraschenderweise wurde festgestellt, dass die erfindungsgemäße neue Verwendung der Polyamidformmasse im Gegensatz zu EP 1 550 684 A2 dazu führt, dass Ablagerungen der Polyamidformmasse in den bei der Verarbeitung verwendeten Werkzeugen weitestgehend unterbleiben. Als zusätzliche Effekte werden nicht nur die Sublimation der im Polyamid 12 verbliebenen Restmonomere oder Oligomere oder die bei der Verarbeitung gebildeten Abbauprodukte vermindert, sondern auch der Zusatz eines "Lösungsmittels", das diese Beläge verflüssigen soll, vermieden. Somit sind die erfindungsgemäss hergestellten Gegenstände weitgehend frei von festen und flüssigen Belägen.

Die erfindungsgemässen Formmassen weisen zudem einen hohen Bioanteil nach ASTM D6866-06a von mindestens 60% auf. Der Bioanteil nach ASTM D6866-06a ist das Maß für den Anteil an nicht-fossilem, d. h. nachwachsendem Kohlenstoff. Der Bioanteil wird dabei aus dem Verhältnis der Kohlenstoffisotope C₁₂ und C₁₄ abgeleitet. Da sich dieses Verhältnis bei fossilen und nachwachsenden Rohstoffen deutlich unterscheidet, kann der Bioanteil an den erfindungsgemäßen Polyamidformmassen messtechnisch einfach als eindeutig produktcharakterisierende Eigenschaft nachgewiesen werden.

Beispielsweise beträgt der Bioanteil für PA 616 69%, für PA 916 sind es 62%.

Die erfindungsgemässen Formmassen weisen somit nicht nur bessere mechanische Eigenschaften, verglichen mit herkömmlichen Polyamidformmassen, insbesondere PA 12 auf, sondern können auch zu einem wesentlichen Teil auf nachwachsenden Rohstoffen gewonnen werden.

Die nachfolgenden Ausführungen betreffen bevorzugte Ausführungsformen der erfindungsgemässen Formmasse und sind einzeln oder in Kombination auf die oben angegebene Formmasse anwendbar.

### Komponente (A)

Nach einer bevorzugten Ausführungsform der vorliegenden Erfindung liegt der Anteil von Komponente (A) bezogen auf das Gesamtgewicht der Komponenten (A) bis (C) bzw. bezogen auf die Polyamid-Formmasse im Bereich von 42 bis 90 Gew.-%, besonders bevorzugt 47 bis 80 Gew.-% und insbesondere bevorzugt 47 bis 79.9 Gew.%.

Hierbei ist es bevorzugt, wenn die Polyamidmischung (A) aus 50 bis 95 Gew.-%, bevorzugt aus 60 bis 90 Gew.-% und insbesondere 65 bis 85 Gew.-% Polyamid (A1) und aus 5 bis 50 Gew.-%, besonders bevorzugt aus 10 bis 40 Gew.-% und insbesondere aus 15 bis 35 Gew.-% aus Polyamid (A2), Polyamid (A3) oder aus einer Mischung aus den Polyamiden (A2) und (A3) besteht.
Es ist somit möglich, dass die Polyamidmischung (A) neben der zwingend anwesenden Komponente (A1) noch entweder die Komponente (A2) oder (A3) oder beide der Komponenten (A2) und (A3) enthält. Hierbei ist es bevorzugt, dass die Summe der Komponenten (A2) und (A3) 5 bis 50 Gew.-%, bevorzugt 10 bis 40 Gew.-% und insbesondere 15- 35 Gew.-%, bezogen auf die Summe der Komponenten (A1) bis (A3) beträgt.

Besonders bevorzugt beträgt der Anteil des Polyamids (A1) 50 bis 90 Gew.-%, bevorzugt 60 bis 80 Gew.-%, der Anteil des Polyamids (A2) 5 bis 25 Gew.-%, besonders bevorzugt 10 bis 20 Gew.-% und der Anteil des Polyamids (A3) 5 bis 25 Gew.-%, besonders bevorzugt aus 10 bis 20 Gew.-% an der gesamten Komponente (A).

### Komponente (A1)

Bei Komponente (A1) handelt es sich um mindestens ein aliphatisches Polyamid, das mindestens zu 50 mol-%, bevorzugt zu 60 oder 80 mol-% und insbesondere ausschliesslich (zu 100 mol-%) aus den Polyamid-Einheiten PA616, PA516 und PA916 besteht.

Bei den Polyamid-Einheiten, die neben den Polyamid-Einheiten 616, 916 und 516 in Komponente (A1) vorhanden sind, handelt es sich bevorzugt um die Polyamid-Einheiten 6S, 9S oder 10S, wobei S jeweils für eine acyclische, aliphatische Dicarbonsäuren mit 9 bis 18, bevorzugt 10 bis 16 Kohlenstoffatomen steht. Besonders bevorzugt sind dabei die Polyamid-Einheiten 6S und 10S, wobei S für eine acyclische, aliphatische Dicarbonsäuren mit 10 bis 14 steht, oder es sich insbesondere um die Polyamid-Einheiten 610, 612, 614, 1010, 1012 und 1014 handelt.

Die aliphatische Dicarbonsäure (S) ist bevorzugt ausgewählt aus der Gruppe bestehend aus 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, und Mischungen daraus. Besonders bevorzugt sind die offenkettigen, aliphatischen Dicarbonsäuren (S) ausgewählt aus der Gruppe bestehend aus Dicarbonsäuren mit 10 bis 16 Kohlenstoffatomen, insbesondere 1,10-Decandisäure, 1,12-Dodecandisäure, 1,14-Tetradecandisäure und Mischungen hiervon.

In einer weiteren Ausführungsform ist Komponente (A1) bevorzugt ausgewählt aus den Homopolyamiden 616, 516 und 916, sowie den Copolyamiden 516/616, 516/916, 616/1016, 616/610, 616/612 und 616/614 und Mischungen davon, wobei der Anteil an 616, 516 und 916 in den Copolyamiden wenigstens 50 mol-%, bevorzugt wenigstens 60 mol-% und insbesondere 80 mol-% ausmacht.

Insbesondere bevorzugt werden die Polyamide 616, 616/1016 und 616/614, wobei der Anteil an 616 in den Copolyamiden 616/1016 und 616/614 wenigstens 50 mol-%, bevorzugt wenigstens 60 mol-% und insbesondere 80 mol-% ausmacht.

Komponente (A1) wird gebildet durch Polykondensation der Diamine 1,5-Pentandiamin, 1,6-Hexandiamin und/oder 1,10-Dekandiamin sowie der aliphatischen Dicarbonsäuren 1,16-Hexadecandisäure und 1,18-Octadecandisäure.

Hinsichtlich der Verarbeitbarkeit erweist es sich als Vorteil, wenn das aliphatische Polyamid der Komponente (A1), insbesondere wenn dieses als PA616 ausgewählt ist, eine Lösungsviskosität (bestimmt anhand einer 0.5 Gew.-%igen Lösung des Polymeren in m-Cresol) im Bereich von ηᵣₑₗ = 1.6 bis 3.0, bevorzugt im Bereich von ηᵣₑₗ = 1.7 bis 2.7, insbesondere im Bereich von 1.80 bis 2.30, aufweist.

Insbesondere ist es bevorzugt, wenn die Komponente (A1) überwiegend auf Monomeren basiert, die aus nachwachsenden oder erneuerbaren Rohstoffen zugänglich sind, so dass der Bioanteil nach ASTM D6866-068a des Polyamids (A1) mindestens 60 Gew.-%, bevorzugt mindestens 65 Gew.-% und insbesondere mindestens 68 Gew.-% beträgt

### Komponente (A2)

Bei Komponente (A2) handelt es sich um mindestens ein transparentes Polyamid der Formel VX/WX/VY/WY/Z, wobei mindestens eine der Polyamideinheiten WX oder WY vorhanden sein muss (und somit die Einheiten VX, VY und Z optional sind) und wobei die Einheiten V, W, X, Y, und Z von den folgenden Molekülen abgeleitet sind, die im Polyamid gemäß Komponenten (A2) amidisch gebunden vorliegen:
(V): Acyclisches aliphatisches Diamin mit 6 bis 12 Kohlenstoffatomen;
(W): Cycloaliphatisches Diamin;
(X): Acyclische aliphatische Dicarbonsäure mit 9 bis 18 Kohlenstoffatomen;
(Y): Aromatische Dicarbonsäuren; (Z): Lactame, Aminocarbonsäuren.

Unter Transparenz bei der Bezeichnung der Komponente (A2) ist generell zu verstehen, dass die Lichttransmission einer aus der Komponente (A2) hergestellten Platte einer Dicke von 2 mm wenigstens 88%, bevorzugt wenigstens 90%, beträgt, wenn die Transmission mittels UV/VIS-Spektrometer bei einer Wellenlänge von 600 nm bestimmt wird.

Gemäß einer bevorzugten Ausführungsform ist das Diamin (V) ausgewählt aus der Gruppe bestehend aus Hexandiamin, insbesondere 1,6-Hexandiamin, 2,2,4-Trimethyl-1,6-hexamethylendiamin, 2,4,4-Trimethyl-1,6-hexamethylendiamin, Nonandiamin, insbesondere 1,9-Nonandiamin, 2-Methyl-1,8-octan-diamin, 1,10-Decandiamin, 1,11-Undecandiamin, 1,12-Dodecandiamin und Mischungen daraus. Besondere bevorzugt sind die offenkettigen, aliphatischen Diamine (V) ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon.

Eine weitere bevorzugte Ausführungsform der vorliegenden Erfindung sieht vor, dass das cycloaliphatische Diamin (W) ausgewählt ist aus der Gruppe bestehend aus Bis-(4-amino-3-methyl-cyclohexyl)-methan (MACM), Bis-(4-amino-cyclohexyl)-methan (PACM), Bis-(4-amino-3-ethyl-cyclohexyl)-methan, Bis-(4-amino-3,5-dimethyl-cyclohexyl)-methan (TMDC), 2,6-Norbornandiamin (2,6-Bis-(aminomethyl)-norbornan), 1,3-Diaminocyclohexan (BAC), 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus. Besonders bevorzugt sind die cycloaliphatischen Diamine (W) ausgewählt aus der Gruppe bestehend aus Bis-(4-amino-3-methyl-cyclohexyl)-methan (MACM) und Bis(4-amino-cyclohexyl)methan (PACM) und Mischungen hiervon.

Eine weitere bevorzugte Ausführungsform der vorliegenden Erfindung sieht vor, dass die aliphatische Dicarbonsäure (X) ausgewählt ist aus der Gruppe bestehend aus 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, und Mischungen daraus. Besonders bevorzugt sind die offenkettigen, aliphatischen Dicarbonsäuren (X) ausgewählt aus der Gruppe bestehend aus Dicarbonsäuren mit 10 bis 16 Kohlenstoffatomen, insbesondere 1,10-Decandisäure, 1,12-Dodecandisäure, 1,14-Tetradecandisäure, 1,16-Hexadecandisäure und Mischungen hiervon.

Nach einer weiteren bevorzugten Ausführungsform der vorliegenden Erfindung ist die aromatische Dicarbonsäure (Y) ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyldicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon. Besonders bevorzugt sind die aromatischen Dicarbonsäuren (Y) ausgewählt sind aus der Gruppe bestehend aus Terephthalsäure, Isophthalsäure und Mischungen hiervon.

Nach einer weiteren bevorzugten Ausführungsform der vorliegenden Erfindung ist das Lactam und/oder die α,ω-Aminocarbonsäure (Z) ausgewählt aus der Gruppe bestehend aus Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA), besonderes bevorzugt sind Laurinlactam, α,ω-Aminoundecansäure und α,ω-Aminododecansäure und Mischungen daraus.

Bei Komponente (A2) gemäss der Formel VX/WX/VY/WY/Z ist besonders bevorzugt, dass (V) ausgewählt ist aus der Gruppe 1,6-Hexandiamin, 1,9-Nonandiamin, 1,10-Decandiamin, (W) aus der Gruppe Bis-(4-amino-3-methyl-cyclohexyl)-methan (MACM) und Bis(4-amino-cyclohexyl)methan (PACM), (X) aus der Gruppe 1,10-Decandisäure, 1,12-Dodecandisäure, 1,14-Tetradecandisäure, 1,16-Hexadecandisäure, (Y) aus der Gruppe Terephthalsäure, Isophthalsäure und (Z) aus der Gruppe Laurinlactam, α,ω-Aminoundecansäure und α,ω-Aminododecansäure.

Hinsichtlich der Eigenschaften und der Verarbeitung erweist sich als vorteilhaft, wenn das transparente Polyamid (A2) eine Lösungsviskosität (ηᵣₑₗ, bestimmt anhand einer 0.5 Gew.-%igen Lösung des Polymeren in m-Kresol bei 20 °C gemäss ISO 307:2013) zwischen 1.4 und 2.2, insbesondere bevorzugt zwischen 1.50 und 2.0 und insbesondere im Bereich von 1.60 bis 1.90 aufweist und/oder einen Glasübergangspunkt T_{g} oberhalb von 90°C, bevorzugt oberhalb von 100 °C, weiter bevorzugt oberhalb von 110°C, insbesondere bevorzugt oberhalb von 130°C besitzt. Ebenfalls als vorteilhaft erweist es sich, wenn das transparente Polyamid (A2) ein amorphes Polyamid mit einer Schmelzenthalpie von weniger als 4 J/g oder ein mikrokristallines Polyamid mit einer Schmelzenthalpie im Bereich von 4-30 J/g, insbesondere im Bereich von 4-25 J/g, ist.

Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5) kommerziell erhältlich ist. Die Ziffer nach dem Begriff MACM steht jeweils für eine aliphatische Dicarbonsäure (C12 z.B. DDS, Dodecandisäure), mit welcher das Diamin MACM polykondensiert ist. PACM steht für die ISO-Bezeichnung Bis-(4-aminocyclohexyl)-methan, welches unter dem Handelsnamen 4,4'-Bisaminodi-dyclohexymethan als Dicykan-Typ (CAS Nr. 1761-71-3) kommerziell erhältlich ist.

Bevorzugt handelt es sich bei der Komponente (A2) um MACM12, PACM12, MACM14, PACM14, MACM16, PACM16, MACM18, PACM18, MACMI/12, MACMI/MACMT/MACM12, MACMI/MACMT/MACM16 oder MACMI/MACMT/12 oder um eine Mischung zweier oder mehrerer dieser Systeme.

Bei den lactamhaltigen Polyamiden (A2) der Zusammensetzung MACMI/12 und MACMI/MACMT/12, liegt der Gehalt an Laurinlactam vorzugsweise im Bereich von 10 bis 45 mol-%, bevorzugt von 15 bis 40 mol-%, insbesondere kleiner 20 bis 35 mol-%.

Besonders bevorzugte transparente Polyamide sind: MACM12, MACM16, MACMI/12, MACMI/MACMT/MACM12, MACMI/MACMT/MACM16, 6I/6T/612/MACMI/MACMT/MACM12, 6I/6T/616/MACMI/MACMT/MACM16 und MACMI/MACMT/12.

### Komponente (A3)

Optional kann die Formmasse des Weiteren als Komponente (A3) mindestens ein langkettiges aliphatisches Polyamid ausgewählt aus der Gruppe bestehend aus Polyamid 11, Polyamid 12, und den Polyamiden PA10U, wobei (U) für amidisch gebundene acyclische aliphatische Dicarbonsäuren mit 10 bis 18 Kohlenstoffatomen steht, enthalten. Insbesondere ist Komponente (A3) ausgewählt aus der Gruppe der Polyamide bestehend aus PA1010, PA1012, PA1014, PA1212, PA 1214, PA1016 oder deren Mischung. Insbesondere bevorzugt wird Polyamid 1016.

Komponente (A3) wird vorzugsweise gebildet durch Polykondensation/Polymerisation der aliphatischen Diamine 1,10-Dekandiamin und/oder 1,12-Dodecandiamin sowie der aliphatischen Dicarbonsäuren 1,10-Decandisäure, 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure 1,18-Octadecandisäure bzw. Lactamen oder Aminocarbonsäuren α,ω-Aminodecansäure, α,ω-Aminoundecansäure (AUA), Laurinlactam (LL) und α,ω-Aminododecansäure (ADA).

Hinsichtlich der Verarbeitbarkeit und der Eigenschaften der hergestellten Gegenstände erweist es sich als Vorteil, wenn das aliphatische Polyamid der Komponente (A3), insbesondere wenn dieses als PA12, PA1010 und PA1016 ausgewählt ist, eine Lösungsviskosität (bestimmt anhand einer 0.5 Gew.-%igen Lösung des Polymeren in m-Cresol bei 20 °C gemäss ISO 307:2013) im Bereich von ηᵣₑₗ = 1.5 bis 3.0, bevorzugt im Bereich von ηᵣₑₗ = 1.6 bis 2.6, insbesondere im Bereich von 1.70 bis 2.30, aufweist.

In einer bevorzugten Ausführungsform beträgt die Summe der Komponenten (A2) und (A3) 5 bis 50 Gew.-%, bevorzugt 10 bis 40 Gew.-% und insbesondere 15- 35 Gew.%.

### Komponente (B)

Die Komponente (B) kann sowohl faserförmige Verstärkungsmittel als auch weitere partikuläre Füllstoffe enthalten. Insbesondere wird bevorzugt, wenn (B) ausschliesslich aus faserförmigen Verstärkungsmitteln, ausgewählt aus der Gruppe: Glasfasern, Kohlenstofffasern, Borfasern, Aramidfasern, Basaltfasern respektive Mischungen davon, besteht.

Gemäss einer bevorzugten Ausführungsform der erfindungsgemässen Polyamidformmasse wird die Komponente (B) vollständig aus Glasfasern gebildet.

Die verwendeten Glasfasern besitzen eine Querschnittsfläche, die entweder kreisförmig (oder synonym rund) oder nicht-kreisförmig (oder synonym flach) ist, wobei im letzteren Fall das Abmessungsverhältnis von der Haupt-Querschnittsachse zur Neben-Querschnittsachse mindestens 2, z.B. von 2.5 bis 4.5 beträgt.

Die Verstärkung mit Glasfasern kann mit Kurzfasern (z.B. Schnittglas mit einer Länge von 2 - 50 mm) oder Endlosfasern (Langglas oder Rovings) erfolgen.

Die erfindungsgemäss als Roving (Füllstoffkomponente B) eingesetzten Glasfasern weisen einen Durchmesser von 10 bis 20 µm, bevorzugt von 12 bis 17 µm auf. Unter dem allgemein verwendeten Begriff Durchmesser ist bei Fasern mit nicht kreisförmigem, d.h. anisotropem Querschnitt, d.h. mit einer längeren Haupt-Querschnittsachse als Neben-Querschnittsachse im weiteren die Länge der Haupt-Querschnittsachse zu verstehen. Insbesondere werden erfindungsgemäss E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 µm, solche mit einem Durchmesser von 10 bis 14 µm, insbesondere solche mit einem Durchmesser von 10 bis 12 µm verwendet werden.

In einer bevorzugten Ausführungsform sind die erfindungsgemäss eingesetzten Glasfasern Kurzglasfasern mit einem Durchmesser im Bereich von 7 bis 20, bevorzugt 9 bis 12 µm. Die Glasfasern liegen in Form von Schnittglas mit einer Länge von 2 bis 50 mm vor. Insbesondere werden erfindungsgemäss E-und/oder S-Glasfasern verwendet. Es können aber auch alle anderen Glasfasersorten, wie z. B. A-, C-, D-, M-, R-Glasfasern oder beliebige Mischungen davon oder Mischungen mit E- und/oder S-Glasfasern eingesetzt werden. Es werden die für Polyamid üblichen Schlichten, wie z. B. diverse Aminosilanschlichten, verwendet, wobei hochtemperaturstabile Schlichten bevorzugt werden.

In einer weiteren bevorzugten Ausführungsform sind die eingesetzten Glasfasern Langglasfasern. Die erfindungsgemäss als Roving eingesetzten Glasfasern weisen einen Durchmesser von 10 bis 20 µm, bevorzugt von 12 bis 17 µm auf. Insbesondere werden erfindungsgemäss E-Glasfasern verwendet. Neben den bevorzugten E-Glasfasern, werden insbesondere S-Glasfasern eingesetzt, da sie gegenüber den E-Glasfasern eine um 30% höhere Zugfestigkeit besitzen. Es können aber auch alle anderen Glasfasersorten, wie z.B. A-, C-, D-, M, R-Glasfasern oder beliebige Mischungen davon oder Mischungen mit E-und/oder S-Glasfasern eingesetzt werden.

Bei den flachen Glasfasern, also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2, bevorzugt von 2.5 bis 4.5, insbesondere von 3 bis 4 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebenden Rechtecks zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die erfindungsgemässen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Die flachen Glasfasern der Komponente (B1) sind dabei z.B. bevorzugt als E-Glasfasern gemäss ASTM D578-00 mit nicht-kreisförmigem Querschnitt ausgewählt, vorzugsweise aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid. Die Glasfasern der Komponente (B1) weisen bevorzugt als flache E-Glasfasern eine Dichte von 2.54 - 2.62 g/cm³, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Eine bevorzugte Ausführungsform der Polyamidformmasse nach der Erfindung zeichnet sich dadurch aus, dass die Komponente (B) im Bereich von 10-55 Gew.-%, bevorzugt im Bereich von 20 - 50 Gew.-%, weiter bevorzugt von 30 bis 50 Gew.-%, insbesondere bevorzugt in Form von Glasfasern, vorliegt.

Die Komponente (B) kann des weiteren Füllstoffe, gegebenenfalls in oberflächenbehandelter Form enthalten, ausgewählt aus der folgenden Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, insbesondere gemahlene Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigen Verzug erlauben.

Als Füllstoff können die erfindungsgemässen thermoplastischen Formmassen vorzugsweise also einen teilchenförmigen Füllstoff oder eine Mischung aus zwei oder mehr unterschiedlichen Füllstoffen auch in Kombination mit Verstärkungsstoffen enthalten.

### Komponente C

Die erfindungsgemäße Polyamid-Formmasse enthält 0 bis 3 Gew.-% mindestens eines Zusatzstoffes (Hilfsstoffe und/oder Additive) als Komponente (C).

Gemäß einer bevorzugten Ausführungsform enthält die erfindungsgemäße Polyamid-Formmasse 0,1 bis 3.0 Gew.-% und bevorzugt 0.5 bis 2.0 Gew.-% mindestens eines Zusatzstoffes als Komponente (C).

Nach einer bevorzugten Ausführungsform ist Komponente (C) ausgewählt aus der Gruppe bestehend aus Schmiermitteln, Wärmestabilisatoren, Verarbeitungsstabilisatoren, Oxidationsverzögerern, Mitteln gegen Wärmezersetzung und Zersetzung durch ultraviolettes Licht, Gleit- und Entformungsmitteln, Färbemitteln, insbesondere Farbstoffen und Pigmenten, Keimbildungsmitteln, Weichmachern, Flammschutzmitteln, anorganischen Pigmenten, organischen Pigmenten und Mischungen davon.

Nach einer besonders bevorzugten Ausführungsform enthält die Polyamid-Formmasse als Komponente (C) mindestens ein Schmiermittel, wobei dieses bevorzugt in einem Anteil von 0 bis 2 Gew.-% , insbesondere bevorzugt von 0,05 bis 2.0 Gew.-%, besonders bevorzugt von 0,1 bis 1,5 Gew.-% und am bevorzugtesten von 0,1 bis 1,0 Gew.-%, jeweils bezogen auf das Gesamtgewicht der Polyamid-Formmasse, enthalten ist.

Hierbei bevorzugt sind AI-, Alkali-, Erdalkalisalze, Ester oder Amide von Fettsäuren mit 10 bis 44 C-Atomen und vorzugsweise mit 14 bis 44 C-Atomen, wobei die Metallionen Na, Mg, Ca und Al bevorzugt und Ca oder Mg besonders bevorzugt sind. Besonders bevorzugte Metallsalze sind Ca-Stearat und Ca-Montanat sowie Al-Stearat. Die Fettsäuren können 1- oder 2-wertig sein. Als Beispiele seien Pelargonsäure, Palmitinsäure, Laurinsäure, Margarinsäure, Dodecandisäure, Behensäure und die besonders bevorzugten Stearinsäure, Caprinsäure sowie Montansäure (Mischung von Fettsäuren mit 30 bis 40 C-Atomen), genannt.

Weiterhin sind aliphatischen Alkohole, die 1- bis 4-wertig sein können, als Schmiermittel bevorzugt. Bevorzugt sind diese Alkohole ausgewählt aus der Gruppe bestehend aus n-Butanol, n-Octanol, Stearylalkohol, Ethylenglykol, Propylenglykol, Neopentylglykol, Glycerin, Pentaerythrit und Mischungen daraus, wobei Glycerin und Pentaerythrit bevorzugt sind.

Außerdem sind aliphatischen Amine, die 1- bis 3-wertig sein können, bevorzugte Schmiermittel. Bevorzugte Amine sind ausgewählt aus der Gruppe bestehend aus Stearylamin, Ethylendiamin, Propylendiamin, Hexamethylendiamin, Di(6-Aminohexyl)amin und Mischungen hiervon, wobei Ethylendiamin und Hexamethylendiamin besonders bevorzugt sind.

Bevorzugte Ester oder Amide von Fettsäuren sind ausgewählt aus der Gruppe bestehend aus Glycerindistearat, Glycerintristearat, Ethylendiamindistearat, Glycerinmonopalmitat, Glycerintrilaurat, Glycerinmonobehenat, Pentaerythrittetrastearat und Mischungen hiervon.

Nach einer weiteren bevorzugten Ausführungsform enthält die Polyamid-Formmasse als Komponente (C) mindestens einen Wärmestabilisator, wobei dieses bevorzugt in einem Anteil von 0 bis 3 Gew.-%, insbesondere bevorzugt von 0,02 bis 2,0 Gew.-% und besonders bevorzugt von 0,1 bis 1,5 Gew.-%, jeweils bezogen auf das Gesamtgewicht der Polyamid-Formmasse (I), enthalten ist.

Gemäß einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, CuI, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten (A) bis (C).
   Die Kupferverbindungen sind handelsüblich bzw. ihre Herstellung ist dem Fachmann bekannt. Die Kupferverbindungen können als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie NaI, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0,2 bis 2, bevorzugt von 0,2 bis 1,5 Gew.-% vorliegen,
- Stabilisatoren auf Basis sterisch gehinderter Phenole, wobei diese Stabilisatoren vorzugsweise in einer Menge von 0,1 bis 1,5, bevorzugt von 0,2 bis 1,0 Gew.-% vorliegen, und
- Phosphiten und Phosphoniten, sowie
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.

Als sterisch gehinderte Phenole eignen sich prinzipiell alle Verbindungen mit phenolischer Struktur, die am phenolischen Ring mindestens eine sterisch anspruchsvolle Gruppe aufweisen. Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von CuI und KI. Eine kommerziell erhältliche Stabilisatormischung, bestehend aus organischen Stabilisatoren und Epoxiden ist beispielsweise Irgatec NC66 von Ciba Spez. GmbH. Insbesondere bevorzugt ist eine Wärmestabilisierung ausschließlich auf Basis von CuI und KI.

Weiterhin kann die erfindungsgemäße Polyamid-Formmasse als Komponente (C) übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z.B. TAD), Hydrochinone, verschiedene substituierte Vertreter dieser Gruppen und deren Mischungen in Konzentrationen bis zu 1 Gew.-%, bezogen auf das Gewicht der Polyamid-Formmasse (I) genannt.

Als UV-Stabilisatoren, die im Allgemeinen in Mengen bis zu 2 Gew.-%, bezogen auf das Gewicht der Polyamid-Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Kaolin, Talk, Aluminiumoxid, Alumosilikat, Siliziumdioxid sowie bevorzugt Talkum eingesetzt werden.

Die vorliegende Erfindung betrifft zudem eine Formmasse wie sie bei der zuvor beschriebenen Verwendung eingesetzt wird. Sämtliche der oben im Rahmen der dargestellten Verwendung der Formmasse beschriebenen bevorzugten Ausführungsformen der Formmasse gelten ebenso für die erfindungsgemäße Formmasse.

In einer bevorzugten Ausführungsform beruht die erfindungsgemässe Formmasse zur Reduktion von Feststoffablagerungen und/oder Belägen auf einer Polyamidformmasse bestehend aus den folgenden Bestandteilen :
(A) 77 - 100 Gew.-% einer Polyamidmischung bestehend aus den Komponenten (A1), (A2) und (A3), wobei
   (A1) 50 - 95, bevorzugt 60 - 90 Gew.-% mindestens ein aliphatisches Polyamid ausgewählt aus den Homopolyamiden 616, 516 und 916, sowie den Copolyamiden 516/616, 516/916, 616/1016, 616/610, 616/612 und 616/614 und Mischungen davon, wobei der Anteil an 616, 516 und 916 in den Copolyamiden wenigstens 50 mol-%, bevorzugt wenigstens 60 mol-% und insbesondere 80 mol-% ausmacht; und
   (A2) 0 - 50 Gew.-% mindestens ein transparentes Polyamid VX/WX/VY/WY/Z, wobei mindestens eine der Polyamideinheiten WX oder WY vorhanden ist und wobei die Abkürzungen V bis Z von den folgenden Molekülen abgeleitet sind: V: 1,6-Hexandiamin, 1,10-Decandiamin; W: MACM, PACM, TMDC; X: 1,10-Decandisäure, 1,12-Dodecandisäure, 1,14-Tetradecandisäure, 1,16-Hexadecandisäure; Y: Terephthalsäure, Isophthalsäure; Z: Laurinlactam, α,ω-Aminoundecansäure und α,ω-Aminododecansäure;
   (A3) 0 - 50 Gew.-% mindestens ein aliphatisches Polyamid ausgewählt aus der Gruppe bestehend aus PA11, PA12, PA1010, PA1012, PA1014, PA1212, PA 1214 und PA1016;
   wobei die Summe aus (A1) bis (A3) die Gesamtheit der Komponente (A) ergibt und die Summe aus (A2) und (A3) 5 bis 50, bevorzugt 10 bis 40 Gew.-% beträgt;
(B) 0 - 20 Gew.-% Füll- oder Verstärkungsstoffe;
(C) 0 - 3 Gew.-% Hilfsstoffe und/oder Additive
wobei die Summe der Komponenten (A) bis (C) 100 Gew.-% ausmacht.

Diese spezielle Formmasse eignet sich insbesondere für Extrusionsanwendungen.

In einer weiteren bevorzugten Ausführungsform beruht die erfindungsgemässe Formmasse zur Reduktion von Feststoffablagerungen und/oder Belägen auf einer Polyamidformmasse bestehend aus den folgenden Bestandteilen :
(A) 37 - 80, bevorzugt 47 - 80 Gew.-% einer Polyamidmischung bestehend aus den Komponenten (A1), (A2) und (A3), wobei
   (A1) 50 - 95, bevorzugt 60 - 90 Gew.-% mindestens ein aliphatisches Polyamid ausgewählt aus den Homopolyamiden 616, 516 und 916, sowie den Copolyamiden 516/616, 516/916, 616/1016, 616/610, 616/612 und 616/614 und Mischungen davon, wobei der Anteil an 616, 516 und 916 in den Copolyamiden wenigstens 50 mol-%, bevorzugt wenigstens 60 mol-% und insbesondere 80 mol-% ausmacht; und
   (A2) 0 - 50 Gew.-% mindestens ein transparentes Polyamid VX/WX/VY/WY/Z, wobei mindestens eine der Polyamideinheiten WX oder WY vorhanden ist und wobei die Abkürzungen V bis Z von den folgenden Molekülen abgeleitet sind: V: 1,6-Hexandiamin, 1,10-Decandiamin; W: MACM, PACM, TMDC; X: 1,10-Decandisäure, 1,12-Dodecandisäure, 1,14-Tetradecandisäure, 1,16-Hexadecandisäure; Y: Terephthalsäure, Isophthalsäure; Z: Laurinlactam, α,ω-Aminoundecansäure und α,ω-Aminododecansäure;
   (A3) 0 - 50 Gew.-% mindestens ein aliphatisches Polyamid ausgewählt aus der Gruppe bestehend aus PA11, PA12, PA1010, PA1012, PA1014, PA1212, PA 1214 und PA1016;
   wobei die Summe aus (A1) bis (A3) die Gesamtheit der Komponente (A) ergibt und die Summe aus (A2) und (A3) 5 bis 50, bevorzugt 10 bis 40 Gew.-% beträgt;
(B) 20 - 60, bevorzugt 20 - 50 Gew.-% Füll-oder Verstärkungsstoffe;
(C) 0 - 3 Gew.-% Hilfsstoffe und/oder Additive
wobei die Summe der Komponenten (A) bis (C) 100 Gew.-% ausmacht.

Diese spezielle Formmasse eignet sich insbesondere für Spritzgussanwendungen.

Des Weiteren betrifft die vorliegende Erfindung ein Verfahren zur Herstelllung von Gebrauchsgegenständen mittels thermoplastischer Umformung in diskontinuierlichen Prozessen, insbesondere im Spritzguss, und in kontinuierlichen Prozessen wie der Extrusion zu Folien, Fasern, Rohren und Ummantelungen, bei dem eine Formmasse wie sie bei der zuvor beschriebenen Verwendung eingesetzt wird.

Sowohl für die erfindungsgemäße Formmasse und das erfindungsgemäße Verfahren gelten hinsichtlich der Formmasse dieselben bevorzugten Ausführungsformen, wie sie voranstehend für die Verwendung beschrieben wurden.

### WEGE ZUR AUSFÜHRUNG DER ERFINDUNG

In den Beispielen gemäss Tabelle 1 wurden nachfolgend genannte Materialien verwendet:

| | |
|---|---|
| PA Typ A: | Polyamid 616 (ηᵣₑₗ = 2.14), EMS-CHEMIE AG, Schweiz |
| PA Typ B: | Polyamid 12 (ηᵣₑₗ = 1.96), EMS-CHEMIE AG, Schweiz |
| PA Typ C: | Polyamid MACM16 mit ηᵣₑₗ = 1.72, EMS-CHEMIE AG, Schweiz |
| PA Typ D: | Polyamid MACMI/MACMT/12 mit ηᵣₑₗ = 1.63, EMS-CHEMIE AG, Schweiz |
| Irganox 1010: | Pentaerythritoltetrakis-[3-(3,5-di-tert-butyl-4-hydroxyphenyl)-propionate, Antioxidans auf Basis eines sterisch gehinderten Phenols |
| Glasfasern Typ A: | CS 7928, 4.5 mm lang, 10 µm Durchmesser, BAYER AG, Deutschland |
| Glasfasern Typ B: | CSG3PA-820, 3 mm lang, 28 µm breit, 7 µm dick, Aspektverhältnis der Querschnittsachsen = 4, (flache Glasfasern) |

Die Formmassen der Zusammensetzungen in Tabelle 1 und Tabelle 2 wurden auf einem Zweiwellenextruder der Fa. Werner u. Pfleiderer Typ ZSK 30 hergestellt. Die Granulate des Typs A bis D sowie die Stabilisierung wurden in die Einzugszone dosiert. Die Glasfaser wurde über einen Sidefeeder 3 Gehäuseeinheiten vor der Düse in die Polymerschmelze dosiert.

Die Gehäusetemperatur wurde als aufsteigendes Profil von 220 bis 280°C eingestellt. Bei 150 bis 200 upm wurden 10 kg Durchsatz erreicht. Die Granulierung erfolgte mittels einer Unterwassergranulierung bzw. Heissabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 100°C für 24h wurden die Granulateigenschaften gemessen und die Prüfkörper hergestellt.

Die Prüfkörper zur Ermittlung der mechanischen Kennwerte der unverstärkten und verstärkten Formmassen wurden auf einer Arburg Spritzgussmaschine hergestellt, wobei die Zylindertemperaturen von 230°C bis 270°C und eine Scheckenumfangsgeschwindigkeit von 15 m/min eingestellt wurden. Die Werkzeugtemperatur betrug 80°C gewählt.

Die Messungen wurden nach folgenden Normen und an folgenden Prüfkörpern durchgeführt.

### Zug-E-Modul:

ISO 527:2012 mit einer Zuggeschwindigkeit von 1 mm/min, ISO-Zugstab,
Norm: ISO/CD 3167 (DIN EN ISO 3167:2014), Typ A1, 170 x 20/10 x 4 mm, Temperatur 23 °C

### Bruchfestigkeit und Bruchdehnung:

ISO 527:2012 mit einer Zuggeschwindigkeit von 5 mm/min für verstärkte Formmassen und mit einer Zuggeschwindigkeit von 50 mm/min für unverstärkte Formmassen. ISO-Zugstab, Norm: ISO/CD 3167 (DIN EN ISO 3167:2014), Typ A1, 170 x 20/10 x 4 mm, Temperatur 23 °C

### Schlagzähigkeit nach Charpy:

ISO 179/*eU (DIN EN ISO 3167:2014), ISO-Prüfstab, Norm: ISO/CD 3167 (DIN EN ISO 3167:2014), Typ B1, 80 x 10 x 4 mm, Temperatur 23 °C, * 1 = nicht instrumentiert, 2 = instrumentiert

### Kerbschlagzähigkeit nach Charpy:

ISO 179/*eA (DIN EN ISO 3167:2014), ISO-Prüfstab, Norm: ISO/CD 3167 (DIN EN ISO 3167:2014), Typ B1, 80 x 10 x 4 mm, Temperatur 23 °C, * 1 = nicht instrumentiert, 2 = instrumentiert

### Glasumwandlungstemperatur (Tg), Schmelzpunkt (Tm) und Schmelzenthalpie (ΔHm):

ISO-Norm 11357 (-1, -2, -3):2013-04, Granulat.
Die Differential Scanning Calorimetry (DSC) wurde mit Aufheizrate von 20 °C/min durchgeführt.

### Relative Viskosität:

DIN EN ISO 307:2013, bestimmt anhand einer 0.5 Gew.-%igen Lösung des Polymeren in iger m-Kresol, Temperatur 20 °C

Wenn in der Tabelle nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

### Extrusion von Wellrohren: Beispiele B1 bis B5 (erfindungsgemäss) sowie Vergleichsbeispiele VB1 und VB2

Zur Untersuchung der Auswirkung der Polyamidformmassen auf die Produktion von Wellrohren wurden die Compounds gemäss Tabelle 1 hergestellt und im Dauerversuch zu Wellrohren verarbeitet. Das Material wurde bei 250 °C extrudiert (Müller & Sohn AG, Rorbas) und mit einer Abzugsgeschwindigkeit von 2m/min und einer Formbackentemperatur von 50 °C zu Wellrohren (Uniwell Corrugator) verarbeitet. Mit den erfindungsgemäßen Compounds zeigten sich nach 10 h nur sehr wenige (Beurteilung "+") oder sogar keine Ablagerungen (Beurteilung "++") an den Vakuumschlitzen, während sich bei den PA12 basierten Formmassen der Vergleichsversuche bereits nach 2 bzw. 3 Stunden ein deutlicher Belag bildete, der die Vakuumschlitze nach 3 bzw. 6 Stunden verstopfte.

**Tabelle 1: Eigenschaften unverstärkter Formmassen, Wellrohrherstellung und Folienherstellung, VB = Vergleichsbeispiel, nicht nach der Erfindung, B = Beispiel nach der Erfindung.**

| **Komponenten** | **Einheit** | **VB1** | **VB2** | **B1** | **B2** | **B3** | **B4** | **B5** |
|---|---|---|---|---|---|---|---|---|
| PA Typ A | Gew.-% | | | 99.5 | 84.5 | 89.5 | 79.5 | 69.5 |
| PA Typ B | Gew.-% | 99.5 | 84.5 | | | | 20.0 | 20.0 |
| PA Typ C | Gew.-% | | 15.0 | | 15.0 | | | |
| PA Typ D | Gew.-% | | | | | 10.0 | | 10.0 |
| IRGANOX 1010 | Gew.-% | 0.5 | 0.5 | 0.5 | 0.5 | 0.5 | 0.5 | 0.5 |
| MVR 275°C/5kg | cm³/10 min | | | 45 | | | | |

| Eigenschaften | | | | | | | | |
|---|---|---|---|---|---|---|---|---|
| Tm | °C | 178 | 178 | 197 | 196 | 196 | 197 | 195 |
| Wasseraufnahme 23°C/50% RF | % | 0.7 | 0.7 | 0.8 | 0.8 | 0.7 | 0.8 | 0.8 |
| Zug-E-Modul | MPa | 1300 | 1400 | 1440 | 1480 | 1450 | 1380 | 1420 |
| Bruchfestigkeit | MPa | 50 | 54 | 55 | 52 | 54 | 53 | 52 |
| Bruchdehnung | % | 275 | 220 | 280 | 220 | 230 | 280 | 210 |
| Schlagzähigkeit Charpy, 23°C | kJ/m² | o.B. | o.B. | o.B. | o.B. | o.B. | o.B. | o.B. |
| Kerbschlagzähigkeit Charpy, 23°C | kJ/m² | 7 | 7 | 8 | 8 | 8 | 8 | 7 |
| Belagsbildung Wellrohre | | -- | - | + | ++ | ++ | + | ++ |

| **Versuchsnummer Flachfolien** | | **VB3** | **VB4** | **B6** | **B7** | **B8** | **B9** | **B10** |
|---|---|---|---|---|---|---|---|---|
| Belagsbildung Flachfolien | | -- | - | + | ++ | ++ | + | ++ |

### Extrusion von Folien auf einer gekühlten Walze: Beispiele B6 bis B10 (erfindungsgemäss) sowie Vergleichsbeispiele VB3 und VB4

Auf einem Zweischneckenextruder ZK 25 T der Firma Collin, Ebersberg, wurden die Zusammensetzungen gemäss Tabelle 1 aufgeschmolzen und als Folie abgezogen, wobei die Belagsbildung innerhalb eines Zeitraumes von 90 Minuten beobachtet wurde. Der Durchmesser der beiden gleichläufigen Schnecken betrug 25 mm und das Längen/Durchmesserverhältnis L/D=8/1. Das Granulat wurde über einen gravimetrischen Dosierer K-Tron K-SFS-24 mit Schneckenförderung dosiert und durch fünf Heizzonen mit 100, 230, 240, 240 und 240 °C aufgeschmolzen. Die Schmelze wurde durch eine horizontale Breitschlitzdüse (120 mm) ausgetragen. Die Drehzahl betrug 150 U/min bei einem Durchsatz von 3 kg/h. Die Folie wurde von einer Flachfolienanlage Collin Chill Roll Typ CR 72 T abgezogen, geglättet und aufgewickelt. Die ersten zwei Walzen waren temperiert (20 °C) und geschlossen. Anschliessend lief die Folie über eine Kühlwalze und wurde aufgewickelt. Bei der Extrusion der Formmassen auf Basis PA12 bildeten sich innerhalb weniger Minuten (10 min bei VB3 (Beurteilung "--") und 18 min bei VB4 (Beurteilung "-")) feste Ablagerungen auf der oberen temperierten Walze, die sich von Zeit zu Zeit von der Walze lösten und auf der Folie hängen blieben. Mit den erfindungsgemässen Zusammensetzungen wurde eine leichte Belagsbildung erst nach 60 Minuten (Beurteilung "+") sichtbar, bzw. wurde innerhalb der 90 minütigen Versuchsdauer nicht beobachtet (Beurteilung "++").

### Spritzguss: Beispiele B11 bis B14 (erfindungsgemäss) und Vergleichsbeispiele VB5 bis VB7:

Auf einer Spritzgussanlage Krauss Maffei KM 50-55C wurden Untersuchungen zur Belagsbildung bei der Verarbeitung der in Tabelle 2 angegebenen Zusammensetzungen durchgeführt. Als Werkzeug wurde ein Modul für Bindenahtzugstäbe verwendet, welches einen nitrierten Entlüftungseinsatz mit 0,01 mm Entlüftungstiefe aufwies. Die Formmassen wurden aufgeschmolzen (Zylindertemperaturen aufsteigend von 230-270 °C) und mit einer Einspritzgeschwindigkeit von 100 mm/s zu Zugstäben hergestellt (Tabelle 2). An der Entlüftungsöffnung des Werkzeuges konnte man bei den PA12 basierten Formmassen (VB5 bis VB7) eine Belagsbildung bereits nach 10 - 20 Zyklen (Beurteilung "-") erkennen, während die erfindungsgemässen Formmassen B11 bis B14 auch nach 50 Verarbeitungszyklen (Beurteilung "+") keinen Belag bildeten.

**Tabelle 2: Eigenschaften verstärkter Formmassen, Spritzgussverarbeitung, VB = Vergleichsbeispiel, nicht nach der Erfindung, B = Beispiel nach der Erfindung.**

| **Komponenten** | **Einheit** | **VB5** | **VB6** | **VB7** | **B11** | **B12** | **B13** | **B14** |
|---|---|---|---|---|---|---|---|---|
| PA Typ A | Gew.-% | | | | 49.5 | 34.5 | 39.5 | 39.5 |
| PA Typ B | Gew.-% | 49.5 | 34.5 | 39.5 | | | | 10.0 |
| PA Typ C | Gew.-% | | 15.0 | | | 15.0 | | |
| PA Typ D | Gew.-% | | | 10.0 | | | 10.0 | |
| IRGANOX 1010 | Gew.-% | 0.5 | 0.5 | 0.5 | 0.5 | 0.5 | 0.5 | 0.5 |
| Glasfaser Typ A | Gew.-% | 50 | 50 | 50 | 50 | 50 | | |
| Glasfaser Typ B | Gew.-% | | | | | | 50 | 50 |

| Eigenschaften | | | | | | | | |
|---|---|---|---|---|---|---|---|---|
| MVR | ccm/10 min | | | | | | | |
| Tm | °C | | | | | | | |
| Zug-E-Modul | MPa | 11720 | 12000 | 11920 | 11840 | 11950 | 11880 | 11700 |
| Bruchfestigkeit | MPa | 149 | 157 | 153 | 152 | 154 | 152 | 151 |
| Bruchdehnung | % | 4.7 | 3.3 | 3.8 | 5.1 | 4.8 | 5.2 | 5.2 |
| Schlagzähigkeit Charpy, 23°C | kJ/m² | 80 | 85 | 88 | 98 | 92 | 94 | 95 |
| Kerbschlagzähigkeit Charpy, 23°C | kJ/m² | 22 | 24 | 25 | 26 | 25 | 26 | 25 |
| Belagsbildung Spritzguss | | - | - | - | + | + | + | + |

## Patentansprüche

1. Verwendung von thermoplastischen Polyamid-Formmassen, enthaltend oder bestehend aus
(A) 37 - 100 Gew.-% einer Polyamidmischung bestehend aus den Komponenten (A1) und (A2), wobei
(A1) 50 - 100 Gew.-% mindestens ein aliphatisches Polyamid, das mindestens zu 50 mol-% aus den Polyamid-Einheiten 616, 916 und 516 besteht; und
(A2) 0 - 50 Gew.-% mindestens ein transparentes Polyamid VX/WX/VY/WY/Z, wobei mindestens eine der Polyamideinheiten WX oder WY vorhanden ist und wobei die Abkürzungen V bis Z von den folgenden Molekülen abgeleitet sind: V: acyclisches aliphatisches Diamin mit 6 bis 12 Kohlenstoffatomen; W: cycloaliphatisches Diamin; X: acyclische aliphatische Dicarbonsäuren mit 9 bis 18 Kohlenstoffatomen; Y: aromatische Dicarbonsäuren Z: Lactame und Aminocarbonsäuren mit 6 bis 12 Kohlenstoffatomen;
(A3) 0 - 50 Gew.-% mindestens ein aliphatisches Polyamid PA11, PA12 und PA10U mit U = amidisch gebundene acyclische aliphatische Dicarbonsäure mit 10 bis 18 Kohlenstoffatomen;
wobei die Summe aus (A1) bis (A3) die Gesamtheit der Komponente (A) ergibt;
(B) 0 - 60 Gew.-% Füll- oder Verstärkungsstoffe;
(C) 0 - 3 Gew.-% Hilfsstoffe und/oder Additive;
wobei die Summe der Komponenten (A) bis (C) 100 Gew.-% ausmacht, zur Reduktion von Feststoffablagerungen und/oder Belägen bei der thermoplastischen Umformung zu Gebrauchsgegenständen in diskontinuierlichen Prozessen, insbesondere im Spritzguss, und in kontinuierlichen Prozessen wie der Extrusion zu Folien, Fasern, Rohren und Ummantelungen.

2. Verwendung nach Anspruch 1, **dadurch gekennzeichnet, dass** das mindestens eine aliphatische Polyamid der Komponente (A1) mindestens zu 60 mol-%, bevorzugt zu 80 mol-% und ganz besonders bevorzugt zu 100 mol-% aus den Polyamid-Einheiten 616, 916 und 516 besteht.

3. Verwendung nach einem der vorhergehenden Ansprüche, **dadurch gekennzeichnet, dass** es sich bei den Polyamid-Einheiten, die neben den Polyamid-Einheiten 616, 916 und 516 in Komponente (A1) vorhanden sind, um Einheiten 6S, 9S oder 10S handelt, wobei S eine acyclische, aliphatische Dicarbonsäuren mit 9 bis 18 Kohlenstoffatomen, bevorzugt 10 bis 16 Kohlenstoffatomen ist.

4. Verwendung nach einem der vorhergehenden Ansprüche, **dadurch gekennzeichnet, dass** die Summe der Komponenten (A2) und (A3) 5 bis 50 Gew.-%, bevorzugt 10 bis 40 Gew.-% und insbesondere 15-35 Gew.-%, bezogen auf die Summe der Komponenten (A1) bis (A3) beträgt.

5. Verwendung nacheinem der vorhergehenden Ansprüche, **dadurch gekennzeichnet, dass** es sich bei der Komponente (A1) um die Homopolyamide PA616, PA916 und PA516, sowie die Copolyamide 516/616, 516/916, 616/1016, 616/610, 616/612 und 616/614 und Mischungen davon handelt.

6. Verwendung nacheinem der vorhergehenden Ansprüche, **dadurch gekennzeichnet, dass** Komponente (A1) überwiegend auf Monomeren basiert, die aus nachwachsenden oder erneuerbaren Rohstoffen zugänglich sind und wobei der Bioanteil nach ASTM D6866-068a des Polyamids (A1) mindestens 60 Gew.-%, bevorzugt mindestens 65 Gew.-% und insbesondere mindestens 68 Gew.-% beträgt.

7. Verwendung nach einem der vorhergehenden Ansprüche, **dadurch gekennzeichnet, dass** es sich bei der Komponente (A2) um MACM12, PACM12, MACM14, PACM14, MACM16, PACM16, MACM18, PACM18, MACMI/12, MACMI/MACMT/MACM12, MACMI/MACMT/MACM16 oder MACMI/MACMT/12 oder um eine Mischung zweier oder mehrerer dieser Systeme.

8. Verwendung nach einem der vorhergehenden Ansprüche, **dadurch gekennzeichnet, dass**
die Verstärkungsstoffe der Komponente (B) ausgewählt sind aus der Gruppe: Glasfasern, Kohlenstofffasern, Borfasern, Aramidfasern, Basaltfasern oder Mischungen solcher Fasern, und/oder
die Füllstoffe der Komponente (B) ausgewählt sind aus der Gruppe: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas.

9. Verwendung nach einem der vorhergehenden Ansprüche, **dadurch gekennzeichnet, dass** die Komponente (B) vollständig aus Glasfasern gebildet wird.

10. Verwendung nach einem der vorhergehenden Ansprüche, **dadurch gekennzeichnet, dass**
das mindestens eine aliphatische Polyamid (A1) eine Lösungsviskosität im Bereich von ηᵣₑₗ = 1.6 bis 3.0, bevorzugt im Bereich von ηᵣₑₗ = 1.7 bis 2.7, insbesondere im Bereich von 1.80 bis 2.30, aufweist, und/oder
das mindestens eine transparente Polyamid (A2) eine Lösungsviskosität (ηᵣₑₗ) im Bereich von 1.4 und 2.2 bevorzugt im Bereich von 1.5 bis 2.0 und insbesondere im Bereich von 1.60 bis 1.90, und/oder einen Glasübergangspunkt T_{g} oberhalb von 90 °C, bevorzugt oberhalb von 100°C, weiter bevorzugt oberhalb von 120°C, insbesondere bevorzugt oberhalb von 130°C aufweist, und/oder
das mindestens eine aliphatische Polyamid (A3) eine Lösungsviskosität (ηᵣₑₗ) im Bereich von ηᵣₑₗ = 1.5 bis 3.0, bevorzugt im Bereich von ηᵣₑₗ = 1.6 bis 2.6, insbesondere im Bereich von 1.70 bis 2.30, aufweist.

11. Verwendung nach einem der vorhergehenden Ansprüche, **dadurch gekennzeichnet, dass**
das mindestens eine transparente Polyamid (A2) ein amorphes Polyamid mit einer Schmelzenthalpie von weniger als 4 J/g ist, oder das mindestens eine transparente Polyamid (A2) ein mikrokristallines Polyamid mit einer Schmelzenthalpie im Bereich von 4 bis 25 J/g ist.

12. Verwendung nach einem der vorhergehenden Ansprüche, **dadurch gekennzeichnet, dass** jeweils bezogen auf die gesamte Polyamidformmasse
die Komponente (A) im Bereich von 42 bis 90 Gew.-%, bevorzugt 47 bis 80 Gew.-% und insbesondere bevorzugt 47 bis 79.9 Gew.-% vorliegt, und/oder
die Komponente (B) im Bereich von 10-55 Gew.-%, bevorzugt im Bereich von 20 - 50 Gew.-%, insbesondere bevorzugt in Form von Glasfasern, und/oder
die Komponente (C) im Bereich von 0.1 bis 3.0 Gew.-%, bevorzugt von 0.5 bis 2.0 Gew.-% vorliegt.

13. Verwendung nach einem der vorhergehenden Ansprüche, **dadurch gekennzeichnet, dass** bezogen auf die Polyamidmischung (A) der Anteil des mindestens einen Polyamids (A1) 50 bis 95 Gew.-%, bevorzugt 60 bis 90 Gew.-%, und insbesondere 65 bis 85 Gew.-%, und der Anteil der Mischung aus den mindestens einen Polyamiden (A2) und (A3) 5 bis 50 Gew.-%, bevorzugt 10 bis 40 Gew.-% und insbesondere 15 bis 35 Gew.-% beträgt
oder
des mindestens einen Polyamids (A1) 50 bis 90 Gew.-%, bevorzugt 60 bis 80 Gew.-%, der Anteil des mindestens einen Polyamids (A2) 5 bis 25 Gew.-%, besonders bevorzugt 10 bis 20 Gew.-% und der Anteil des mindestens einen Polyamids (A3) 5 bis 25 Gew.-%, besonders bevorzugt aus 10 bis 20 Gew.-% beträgt.

14. Polyamid-Formmasse , enthaltend oder bestehend aus
(A) 37 - 99.9 Gew.-% einer Polyamidmischung bestehend aus den Komponenten (A1) und (A2), wobei
(A1) 50 - 95 Gew.-% aliphatisches Polyamid, das mindestens zu 50 mol-% aus den Polyamid-Einheiten PA616, PA916 und PA516 besteht sowie Mischungen aus den zuvor genannten Polyamiden; und
(A2) 5 - 50 Gew.-% transparentes Polyamid VX/WX/VY/WY/Z, wobei mindestens eine der Polyamideinheiten WX oder WY vorhanden ist und wobei die Abkürzungen V bis Z von den folgenden Molekülen abgeleitet sind: V: 1,6-Hexandiamin, 1,10-Dekandiamin; W: MACM, PACM, TMDC, BAC; X: acyclische aliphatische Dicarbonsäuren mit 10 bis 16 Kohlenstoffatomen; Y: Terephthalsäure, Isophthalsäure Z: Caprolactam, Laurinlactam, Aminocapronsäure, Aminododecansäure;
(A3) 0 - 30 Gew.-% Polyamid PA12 und PA1016;
wobei die Summe aus (A1) bis (A3) 100 Gew.-% (A) ergibt;
(B) 0 - 60 Gew.-% Füll- oder Verstärkungsstoffe;
(C) 0.1 - 3 Gew.-% Hilfsstoffe und/oder Additive;
wobei die Summe der Komponenten (A) bis (C) 100 Gew.-% ausmacht.

15. Verfahren zur Herstellung von Gebrauchsgegenständen in diskontinuierlichen Prozessen, insbesondere im Spritzguss, und in kontinuierlichen Prozessen wie der Extrusion zu Folien, Fasern, Rohren und Ummantelungen, bei dem eine Polyamid-Formmasse nach vorhergehendem Anspruch eingesetzt wird.
